# EUROPEAN PATENT APPLICATION

(11) **EP 3 779 809 A1**
(43) Date of publication of application: **17.02.2021**
(21) Application number: 19774557.3
(22) Date of filing: 23.01.2019
(51) Int. Cl.: G06N 20/00, B25J 13/00

(54) **INFORMATION PROCESSING DEVICE AND INFORMATION PROCESSING METHOD**

(30) Priority: 26.03.2018 JP 2018057898
(71) Applicant: Sony Corporation, 108-0075 Tokyo (JP)
(72) Inventor: KIMURA, Tomoya, Tokyo 108-0075 (JP)
(74) Representative: 2SPL Patentanwälte PartG mbB
(86) International application number: PCT/JP2019/001989
(87) International publication number: WO 2019/187548

(57) **Abstract**

[Problem] To achieve an optimum operation following purpose change.

[Solution] Provided is an information processing device including an action value calculation unit configured to calculate an action value that determines behavior of an operation unit, and the action value calculation unit dynamically calculates, based on an acquired purpose change factor and a plurality of first action values learned based on rewards different from each other, a second action value to be input to the operation unit. In addition, provided is an information processing device including a feedback unit configured to determine, based on an operation result of an operation unit that performs dynamic behavior based on a plurality of action values learned based on rewards different from each other, excess and insufficiency related to the action values, and control information notification related to the excess and insufficiency.

## Description

### Field

The present disclosure relates to an information processing device and an information processing method.

### Background

Recently, various kinds of devices utilizing machine learning technologies have been developed. Examples of the above-described devices include various kinds of operation bodies that each perform an autonomous operation based on an action value acquired by reinforcement learning. In addition, technologies for improving the performance and efficiency of reinforcement learning have been actively researched. For example, Non Patent Literature 1 discloses a technology of learning action values in a divided manner based on purposes in reinforcement learning and using the sum of the obtained action values as a definitive action value.

### Citation List

### Patent Literature

Non Patent Literature 1: Harm van Seijen and five others, "Hybrid Reward Architecture for Reinforcement Learning", June 13, 2017, [Online], [March 21, 2018 search], the Internet <https://arxiv.org/pdf/1706.04208.pdf>

### Summary

### Technical Problem

However, with the technology disclosed in Non Patent Literature 1, since ratios in the above-described sum are constant, it is difficult to flexibly change the behavior of an operation body when purposes are changed.

Thus, the present disclosure provides an information processing device and an information processing method that are novel and modified and can achieve an optimum operation following purpose change.

### Solution to Problem

According to the present disclosure, an information processing device is provided that includes an action value calculation unit configured to calculate an action value that determines behavior of an operation unit, wherein based on an acquired purpose change factor and a plurality of first action values learned based on rewards different from each other, the action value calculation unit dynamically calculates a second action value to be input to the operation unit.

Moreover, according to the present disclosure, an information processing device is provided that includes a feedback unit configured to determine, for operation of an operation unit that performs dynamic behavior based on a plurality of action values learned based on rewards different from each other, excess and insufficiency related to the action values and control information notification related to the excess and insufficiency.

Moreover, according to the present disclosure, an information processing method executed by a processor is provided that includes calculating an action value that determines behavior of an operation unit, wherein the calculating includes dynamically calculating, based on an acquired purpose change factor and a plurality of first action values learned based on rewards different from each other, a second action value to be input to the operation unit.

Moreover, according to the present disclosure, an information processing method executed by a processor is provided that includes determining, based on an operation result of an operation unit that performs dynamic behavior based on a plurality of action values learned based on rewards different from each other, excess and insufficiency related to the action values, and controlling information notification related to the excess and insufficiency.

### Advantageous Effects of Invention

According to the present disclosure as described above, it is possible to achieve an optimum operation following purpose change.

The above-described effect is not necessarily restrictive but may include, in addition to or in place of the above-described effect, any effect described in the present specification or another effect that could be understood from the present specification.

### Brief Description of Drawings

FIG. 1 is a diagram for description of an overview of an embodiment of the present disclosure.
FIG. 2 is a block diagram illustrating an exemplary functional configuration of an information processing device according to the present embodiment.
FIG. 3A is a diagram for description of the difference between an action value and an action.
FIG. 3B is a diagram for description of the difference between an action value and an action.
FIG. 4 is a diagram for description of calculation of a second action value by using a weight in accordance with a purpose according to an embodiment of the present disclosure.
FIG. 5 is a diagram for description of calculation of the second action value based on a purpose change instruction provided by a user according to the present embodiment.
FIG. 6 is a diagram for description of matching between a predetermined environment estimated from context and an operation environment according to the present embodiment.
FIG. 7 is a diagram for description of matching between a predetermined environment in which a user sets a purpose operation and an operation environment according to the present embodiment.
FIG. 8 is a diagram for description of control of information notification related to a purpose change factor and changed behavior according to the present embodiment.
FIG. 9 is a flowchart illustrating the process of operation of the information processing device according to the present embodiment.
FIG. 10 is a diagram for description of operation control when the information processing device according to the present embodiment is an agent device.
FIG. 11 is a diagram for description of notification control related to excess of first action values according to the present embodiment.
FIG. 12 is a flowchart illustrating the process of notification control related to excess of first action values according to the present embodiment.
FIG. 13 is a diagram for description of notification control related to insufficiency of first action values according to the present embodiment.
FIG. 14 is a diagram for description of notification control related to insufficiency of first action values according to the present embodiment.
FIG. 15 is a flowchart illustrating the process of notification control related to insufficiency of first action values according to the present embodiment.
FIG. 16 is a diagram illustrating an exemplary hardware configuration of the information processing device according to an embodiment of the present disclosure.

### Description of Embodiments

Preferable embodiments of the present disclosure will be described below in detail with reference to the accompanying drawings. Note that, in the present specification and drawings, components having functional configurations identical to each other in effect are denoted by an identical reference sign, and duplication description thereof are omitted.

Note that the description is performed in an order below.
1. Embodiment
1.1. Overview
1.2. Exemplary functional configuration of information processing device 10
1.3. Calculation of second action value
1.4. Feedback related to excess and insufficiency of first action values
2. Exemplary hardware configuration
3. Conclusion

### <1. Embodiment>

### <<1.1. Overview>>

The following first describes an overview of an embodiment of the present disclosure. As described above, recently, various kinds of operation bodies that each perform an autonomous operation based on an action value acquired by reinforcement learning have been developed. Such an operation body as described above can learn an action value for achieving a predetermined purpose determined at learning and achieve various kinds of an autonomous operation based on the action value.

However, the above-described action value can be used only for the determined purpose. Thus, when the purpose is changed after learning, the operation body needs to relearn a new action value corresponding to a new purpose after the change.

Recently, methods for improving the efficiency of relearning as described above have been disclosed, but the cost of relearning to improve the efficiency is not low, and thus it is desirable to avoid relearning.

In addition, Non Patent Literature 1 described above discloses a technology of learning action values in a divided manner based on purposes in reinforcement learning and using the sum of the obtained action values as a definitive action value.

However, with the technology disclosed in Non Patent Literature 1, since action values learned in a divided manner are summed constantly at predetermined ratios, it is difficult to achieve flexible following of purpose change.

The technological idea of the present disclosure is thought of with focus on the above-described situation and enables an optimum operation following purpose change without relearning. To achieve this, an information processing device 10 that achieves an information processing method according to an embodiment of the present disclosure includes an action value calculation unit 140 configured to calculate an action value that determines the behavior of an operation unit 150. The action value calculation unit 140 according to the present embodiment is characterized to dynamically calculate, based on an acquired purpose change factor and a plurality of first action values learned based on rewards different from each other, a second action value to be input to the operation unit 150.

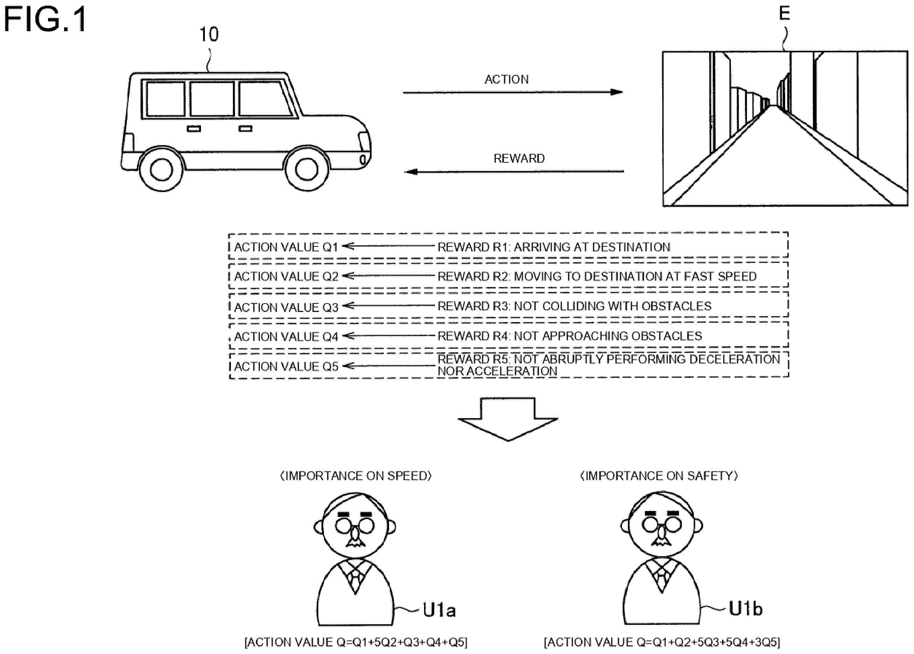

FIG. 1 is a diagram for description of the overview of the present embodiment. FIG. 1 illustrates an example in which the information processing device 10 according to the present embodiment is an automated driving vehicle configured to perform an autonomous operation based on a recognized environment E.

As illustrated in the upper part of FIG. 1, at learning, the information processing device 10 according to the present embodiment learns an action value Q at which a highest reward R can be obtained through an action executed on the environment E. In this case, as illustrated, the information processing device 10 according to the present embodiment is characterized to learn a plurality of action values Q based on a plurality of rewards R different from each other.

In the example illustrated in FIG. 1, the information processing device 10 learns action values Q1 to Q5 corresponding to a plurality of rewards R1 to R5, respectively, based on the rewards R1 to R5. In this case, the rewards R1 to 5 are set for purposes different from each other. For example, in the example illustrated in FIG. 1, the reward R1 is a reward for arriving at a destination, and the reward R2 is a reward for moving to the destination at fast speed. In addition, the reward R3 is a reward for not colliding with obstacles, and the reward R4 is a reward for not approaching obstacles. In addition, the reward R5 is a reward for not abruptly performing deceleration nor acceleration.

In this manner, the information processing device 10 according to the present embodiment can learn the action values Q1 to Q5 for achieving a plurality of different purposes based on the rewards R1 to R5 corresponding to the different purposes. The information processing device 10 according to the present embodiment can achieve a more effective action on the environment E by summing the action values Q learned as described above.

It is assumed that a purpose is changed by various factors when the information processing device 10 is actually used. Thus, the information processing device 10 according to the present embodiment changes ratios in the summation of the action values Q1 to Q5 in accordance with the changed purpose and calculates an action value Q optimized for the purpose, thereby allowing a flexible operation following the purpose change to be achieved.

For example, when a user U1a has a purpose of arriving the destination at fast speed as illustrated in FIG. 1, the information processing device 10 may set, based on the above-described purpose, a high ratio to the action value Q2 learned based on the reward R2 for moving to the destination at fast speed, and calculate a definitive action value Q. In the example illustrated in FIG. 1, the information processing device 10 calculates the definitive action value Q as Q = Q1 + 5Q2 + Q3 + Q4 + Q5.

For example, when a user U1b has a purpose of safely arriving the destination, the information processing device 10 may set, based on the above-described purpose, high ratios to the action values Q3 to Q5 learned based on the rewards R3 to R5 for safe drive, and calculate a definitive action value Q. In the example illustrated in FIG. 1, the information processing device 10 calculates the definitive action value Q as Q = Q1 + Q2 + 5Q3 + 5Q4 + 3Q5.

In this manner, with the information processing device 10 according to the present embodiment, it is possible to achieve a flexible operation following purpose change by changing ratios in the summation of the action values Q1 to Q5 in accordance with a changed purpose.

In addition to the above-described function, the information processing device 10 according to the present embodiment may have a function to detect insufficiency or excess of learned action values and control information notification related to the insufficiency or excess. With the above-described function of the information processing device 10 according to the present embodiment, a designer can understand an action value insufficient for achieving an optimum operation or an excessive action value, thereby achieving more effective reinforcement learning.

The following describes the configuration of the information processing device 10 for achieving the above-described function in detail. Note that, in the following description, a plurality of action values learned based on a plurality of rewards different from each other are also referred to as first action values in some cases. For example, the first action values according to the present embodiment correspond to the action values Q1 to Q5 illustrated in FIG. 1.

In addition, in the following description, a definitive action value calculated based on a plurality of first action values is also referred to as a second action value in some cases. For example, the second action value according to the present embodiment corresponds to the action value Q illustrated in FIG. 1.

### <<1.2. Exemplary functional configuration of information processing device 10>>

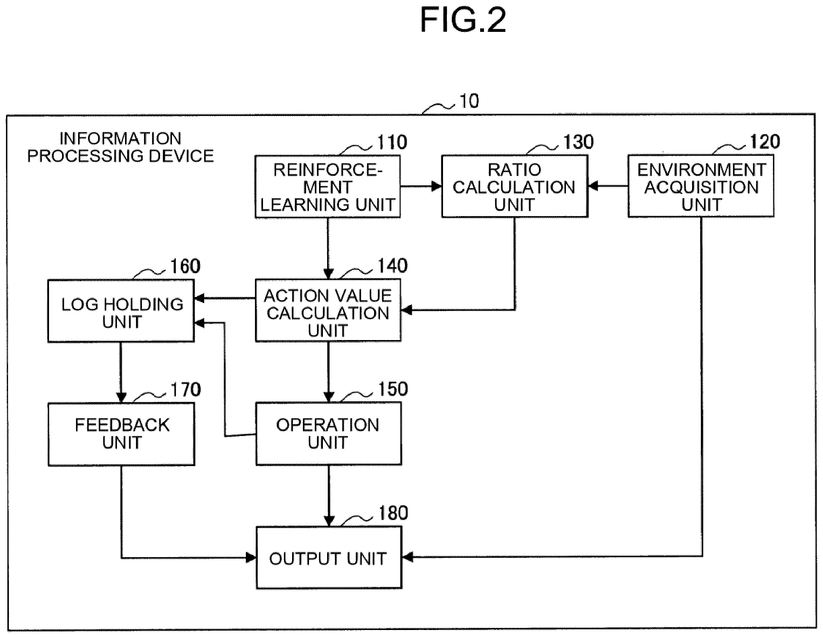

The following describes an exemplary functional configuration of the information processing device 10 according to the present embodiment. FIG. 2 is a block diagram illustrating the exemplary functional configuration of the information processing device 10 according to the present embodiment. With reference to FIG. 2, the information processing device 10 according to the present embodiment includes a reinforcement learning unit 110, an environment acquisition unit 120, a ratio calculation unit 130, the action value calculation unit 140, the operation unit 150, a log holding unit 160, a feedback unit 170, and an output unit 180.

### (Reinforcement learning unit 110)

The reinforcement learning unit 110 according to the present embodiment has a function to learn a plurality of first action values based on a plurality of rewards corresponds to a plurality of purposes (action indexes). The reinforcement learning unit 110 according to the present embodiment outputs the learned first action values and the corresponding action indexes to the ratio calculation unit 130 and the action value calculation unit 140.

### (Environment acquisition unit 120)

The environment acquisition unit 120 according to the present embodiment has a function to acquire various kinds of environments related to the operation of the information processing device 10 when the result of learning by the reinforcement learning unit 110 is used. In addition, the environment acquisition unit 120 according to the present embodiment acquires a purpose change factor as a factor with which a purpose is changed. The environment acquisition unit 120 outputs various kinds of environment parameters related to the acquired environments and purpose change factor to the ratio calculation unit 130. Details of the function of the environment acquisition unit 120 according to the present embodiment will be separately described later.

### (Ratio calculation unit 130)

The ratio calculation unit 130 according to the present embodiment has a function to calculate, based on the purpose change factor, ratios used to calculate the second action value. Specifically, the ratio calculation unit 130 calculates a weight for each first action value based on the first action values input from the reinforcement learning unit 110 and the environment parameters input from the environment acquisition unit 120. The ratio calculation unit 130 outputs the above-described calculated weights to the action value calculation unit 140.

### (Action value calculation unit 140)

The action value calculation unit 140 according to the present embodiment has a function to calculate an action value that determines the behavior of the operation unit 150. In this case, the action value calculation unit 140 according to the present embodiment is characterized to dynamically calculate, based on an acquired purpose change factor and a plurality of first action values learned based on rewards different from each other, the second action value to be input to the operation unit 150.

The action value calculation unit 140 according to the present embodiment can dynamically calculate the second action value by using the ratios calculated based on the purpose change factor by the ratio calculation unit 130. Specifically, the action value calculation unit 140 according to the present embodiment calculates the second action value by summing the first action values based on the above-described weights calculated by the ratio calculation unit 130.

With the above-described function of the action value calculation unit 140 according to the present embodiment, it is possible to dynamically calculate the second action value optimized for a purpose that changes with a situation, thereby achieving a flexible operation of the operation unit 150 following the purpose change. Note that details of the function of the action value calculation unit 140 according to the present embodiment will be separately described later.

### (Operation unit 150)

The operation unit 150 according to the present embodiment is characterized to dynamically change behavior based on the second action value calculated by the action value calculation unit 140 and an estimated operation environment. Note that the operation unit 150 according to the present embodiment can perform various kinds of operations in accordance with characteristics of the information processing device 10. For example, based on the second action value, the operation unit 150 may control automated driving or search for a next action in a game.

In addition, the operation unit 150 according to the present embodiment has a function to cause, when the second action value is changed based on the above-described purpose change factor, the output unit 180 to output information related to the purpose change factor and changed behavior.

### (Log holding unit 160)

The log holding unit 160 according to the present embodiment has a function to hold various logs related to the operation of the information processing device 10. The log holding unit 160 according to the present embodiment may hold, for example, the environment parameters, the weights set to the first action values, the calculated second action value, and a result of the operation of the operation unit 150 based on the second action value.

### (Feedback unit 170)

The feedback unit 170 according to the present embodiment has a function to determine excess and insufficiency related to a plurality of first action values based on a result of the calculation related to the second action value by the action value calculation unit 140, and control information notification related to the excess and insufficiency. Details of the function of the feedback unit 170 according to the present embodiment will be separately described later.

### (Output unit 180)

The output unit 180 according to the present embodiment has a function to output various kinds of information based on control by the operation unit 150 and the feedback unit 170. For example, the output unit 180 according to the present embodiment notifies a user of information related to the purpose change factor and changed behavior based on control by the operation unit 150. In addition, for example, the output unit 180 notifies the designer or the like of information related to excess and insufficiency of first action values based on control by the feedback unit 170.

To achieve this, the output unit 180 according to the present embodiment includes various display devices for outputting visual information, and a speaker or the like for outputting voice.

The exemplary functional configuration of the information processing device 10 according to the present embodiment is described above. Note that the above-described functional configuration described with reference to FIG. 2 is merely exemplary, and the functional configuration of the information processing device 10 according to the present embodiment is not limited to the example. For example, the above-described function of the information processing device 10 may be achieved in a distributed manner by a plurality of devices. For example, the functions of the action value calculation unit 140, the operation unit 150, and the feedback unit 170 may be achieved as the functions of separate devices. The functional configuration of the information processing device 10 according to the present embodiment may be flexibly modified in accordance with specifications and operations.

### <<1.3. Calculation of second action value>>

The following describes calculation of the second action value according to the present embodiment in detail. As described above, the second action value according to the present embodiment is an action value calculated by summing a plurality of first action values learned based on a plurality of rewards.

An action value is an evaluation value allocated to each action selectable by a person and is conceptually different from the action.

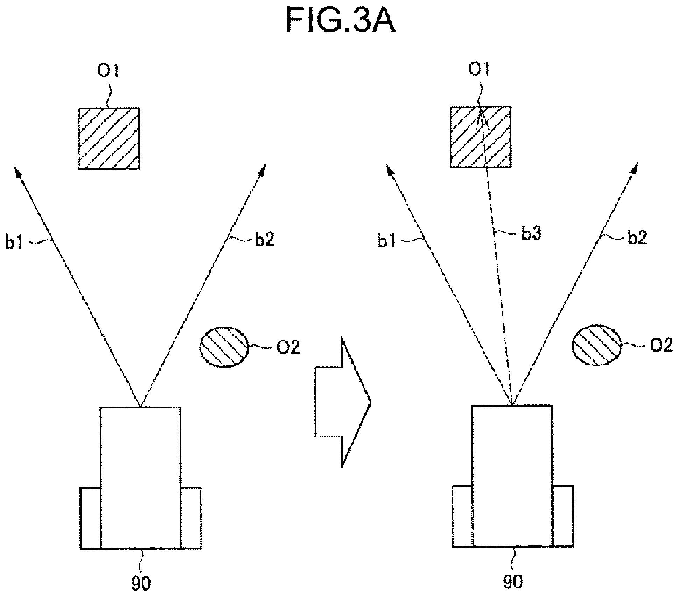

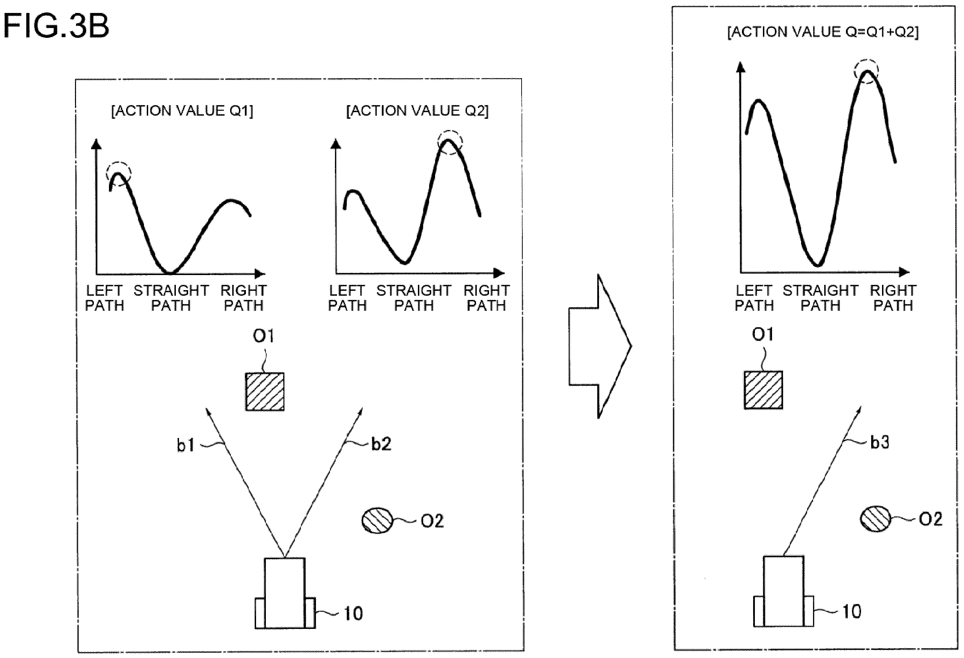

FIGS. 3A and 3B are diagrams for description of the difference between an action value and an action.

FIG. 3A illustrates exemplary behavior when an operation body 90 directly sums actions. FIG. 3A illustrates, on the left side, two actions b1 and b2 that can be performed by the operation body 90 as an automated driving vehicle in an environment in which obstacles 01 and 02 exist. For example, the action b1 may be an action for safely traveling, and the action b2 may be an action for arriving a destination at fast speed.

When the operation body 90 is to perform an action b3 obtained by directly summing the actions b1 and b2, the action b3 is the sum of operation vectors related to the actions b1 and b2 as illustrated on the right side in FIG. 3A and is not only a meaningless action irrespective of a purpose but also potentially causes damage such as collision with the obstacle 01.

FIG. 3B illustrates an example in which the information processing device 10 according to the present embodiment performs an action based on a second action value obtained by summing first action values. FIG. 3B illustrates, on the left side, two actions b1 and b2 that can be performed by the information processing device 10 as an automated driving vehicle in an environment in which obstacles 01 and 02 exist.

The actions b1 and b2 in FIG. 3B may be actions executed based on first action values Q1 and Q2, respectively. Graphs of the values of the action values Q1 and Q2 for an action (left path, straight path, or right path) that can be performed by the information processing device 10 in the above-described environment are illustrated at the upper part on the left side in FIG. 3B.

The action value Q1 may be a first action value learned based on a reward for safe traveling. In this case, the action value Q1 is highest for the left path as a path with fewer obstacles, and thus the action b1 is determined based on the action value Q1.

The action value Q2 may be a first action value learned based on a reward for arriving at the destination at fast speed. In this case, the action value Q2 is highest for the right path, which is closer to the straight path while avoiding obstacles, and thus the action b2 is determined based on the action value Q2.

In this case, the information processing device 10 according to the present embodiment calculates the action value Q corresponding to a second action value by summing the action values Q1 and Q2 corresponding to first action values according to the present embodiment as illustrated on the right side in FIG. 3B instead of the actions b1 and b2, and determines the action b3 for which the action value Q is highest.

With the above-described function of the information processing device 10 according to the present embodiment, unlike a case in which actions are directly summed, it is possible to prevent an action from being performed against a purpose and decrease of safety and the like.

In addition, the action value calculation unit 140 of the information processing device 10 according to the present embodiment may calculate a second action value by using, in summation of first action values as described above, weights calculated in accordance with a purpose.

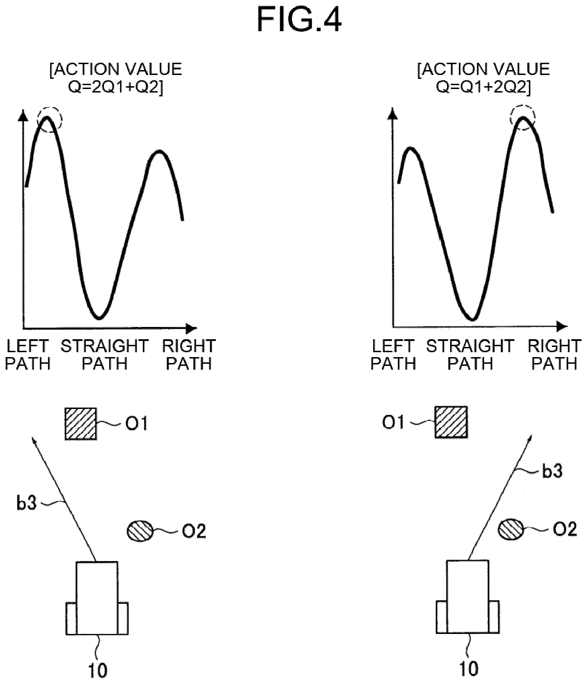

FIG. 4 is a diagram for description of second-action-value calculation using weights in accordance with a purpose according to the present embodiment.

For example, when a purpose with more importance on safety is detected, the ratio calculation unit 130 according to the present embodiment may set, based on the purpose, "2" to a weight W1 for the action value Q1 related to safety and "1" to a weight W2 for the action value Q2 related to fastness and may perform calculation.

In this case, the action value calculation unit 140 according to the present embodiment calculates the action value Q corresponding to a second action value as Q = 2Q1 + Q2, as illustrated on the left side in FIG. 4, by using the above-described weights W1 and W2 calculated by the ratio calculation unit 130.

The operation unit 150 executes the action b3 corresponding to the left path for which the above-described action value Q calculated by the action value calculation unit 140 is highest.

For example, when a purpose with importance on fastness is detected, the ratio calculation unit 130 according to the present embodiment may set, based on the purpose, "1" to the weight W1 for the action value Q1 related to safety and "2" to the weight W2 for the action value Q2 related to fastness and may perform calculation.

In this case, the action value calculation unit 140 according to the present embodiment calculates the action value Q corresponding to a second action value as Q = Q1 + 2Q2, as illustrated on the right side in FIG. 4, by using the above-described weights W1 and W2 calculated by the ratio calculation unit 130.

The operation unit 150 executes the action b3 corresponding to the right path close to the straight path for which the above-described action value Q calculated by the action value calculation unit 140 is highest.

The second action value calculation according to the present embodiment is described above. With the above-described function of the information processing device 10 according to the present embodiment, it is possible to calculate various kinds of second action values by changing weights for first action values in accordance with a purpose and change the behavior of the operation unit 150 without relearning.

The following describes the purpose change factor according to the present embodiment. The purpose change factor according to the present embodiment is various kinds of factors that lead to change in the purpose of operation of the operation unit 150 when the information processing device 10 is used. The information processing device 10 according to the present embodiment detects various kinds of purpose change factors and calculates a second action value optimized for the purpose by determining ratios in accordance with a changed purpose, thereby allowing an operation that satisfies the purpose to be achieved.

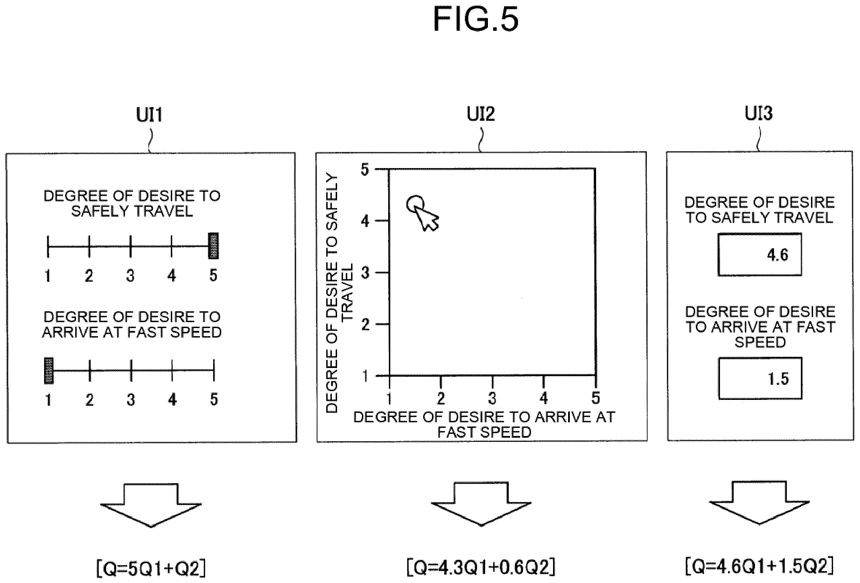

The purpose change factor according to the present embodiment includes, for example, a purpose change instruction provided by a user. FIG. 5 is a diagram for description of the second-action-value calculation based on the purpose change instruction provided by the user according to the present embodiment.

FIG. 5 illustrates exemplary display of a user interface for receiving the purpose change instruction provided by the user. The environment acquisition unit 120 according to the present embodiment can cause the output unit 180 to output user interfaces UI1 to UI3 as illustrated in FIG. 5 and prompt inputting of the purpose change instruction.

For example, when the information processing device 10 is an automated driving vehicle, the environment acquisition unit 120 may cause the output unit 180 installed in the vehicle to display the user interfaces UI to UI3 and query for the degree of user's importance on safety and fastness.

In this case, the environment acquisition unit 120 detects values input at the user interfaces UI1 to UI3 and forwards the values as some of the environment parameters to the ratio calculation unit 130. The ratio calculation unit 130 determines weights for first action values based on the above-described received environment parameters and forwards the weights to the action value calculation unit 140. The action value calculation unit 140 can sum the first action values by using the received weights, thereby calculating a second action value.

For example, in a case of the user interface UI1 illustrated in FIG. 5, the ratio calculation unit 130 may receive, from the environment acquisition unit 120, values input by using indicators corresponding to the action values Q1 and Q2, respectively and determine, based on the values, the weight W1 corresponding to the action value Q1 to be "5" and the weight W2 corresponding to the action value Q2 to be "1". In this case, the action value calculation unit 140 can calculate a second action value Q by Q = 5Q1 + Q2 based on the determined weights W1 and W2.

For example, in a case of the user interface UI2 illustrated in FIG. 5, the ratio calculation unit 130 may receive values input by using graphs having the action values Q1 and Q2 on the vertical axis and the horizontal axis, respectively, from the environment acquisition unit 120 and may determine, based on the values, the weight W1 corresponding to the action value Q1 to be "4.3" and the weight W2 corresponding to the action value Q2 to be "0.6". In this case, the action value calculation unit 140 can calculate the second action value Q by Q = 4.3Q1 + 0.6Q2 based on the determined weights W1 and W2.

For example, in a case of the user interface UI3 illustrated in FIG. 5, the ratio calculation unit 130 may receive values input to input fields corresponding to the action values Q1 and Q2, respectively, from the environment acquisition unit 120 and may determine, based on the values, the weight W1 corresponding to the action value Q1 to be "4.6" and the weight W2 corresponding to the action value Q2 to be "1.5". In this case, the action value calculation unit 140 can calculate the second action value Q by Q = 4.6Q1 + 1.5Q2 based on the determined weights W1 and W2.

The purpose change instruction provided by the user according to the present embodiment is described above with specific examples. With the above-described function of the information processing device 10 according to the present embodiment, it is possible to achieve, without relearning, an operation in accordance with a user requirement that changes in accordance with a situation and the like.

Note that the user interfaces UI1 to UI3 illustrated in FIG. 5 are merely exemplary, and the purpose change instruction according to the present embodiment may be detected by, for example, voice query and inputting. Alternatively, the purpose change instruction according to the present embodiment may be detected based on, for example, a user gesture. Examples of the above-described gesture may include instrument operations such as increase of the degree of importance related to fastness when the user shakes a smartphone, and decrease of the degree of importance related to fastness when the user places weight on the backrest of a seat.

The purpose change factor according to the present embodiment includes change in the operation environment of the operation unit 150. For example, when the operation environment matches with a predetermined environment estimated from context, the environment acquisition unit 120 according to the present embodiment may detect the environment match as the purpose change factor.

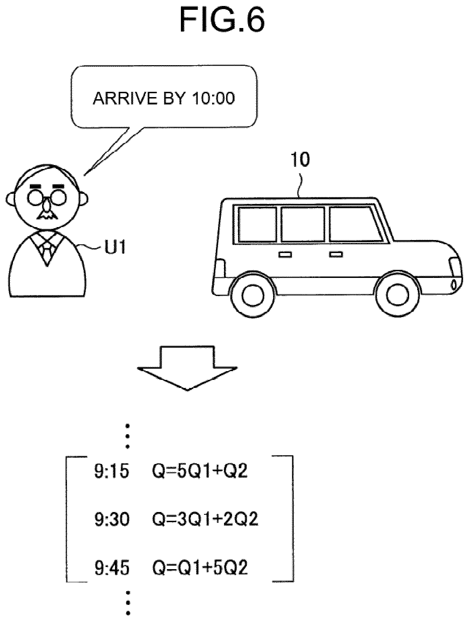

FIG. 6 is a diagram for description of matching of the operation environment with a predetermined environment estimated from context according to the present embodiment. FIG. 6 illustrates exemplary second-action-value calculation when the information processing device 10 as an automated driving vehicle receives the instruction of "arrive by 10:00" by a user U1.

In this case, the environment acquisition unit 120 acquires the current time as one of the environment parameters, calculates the difference between the current time and a set time of arrival at a destination, in other words, the remaining time, and forwards the difference as one of the environment parameters to the ratio calculation unit 130.

The ratio calculation unit 130 determines weights for first action values based on the received remaining time and a conversion function F and forwards the weights to the action value calculation unit 140. The action value calculation unit 140 can calculate a second action value based on the received weights.

For example, when the current time is "9:15", the remaining time is 45 minutes and enough time is remaining, and thus the ratio calculation unit 130 may set "5" to the weight W1 for the action value Q1 related to safety and may set "1" to the weight W2 for the action value Q2 related to fastness. In this case, the action value calculation unit 140 can calculate the second action value Q by Q = 5Q1 + Q2 based on the weight W1 and the weight W2 thus determined.

For example, when the current time is 9:30, the remaining time is 30 minutes and no enough time is remaining, and thus the ratio calculation unit 130 may set "3" to the weight W1 for the action value Q1 related to safety and may set "2" to the weight W2 for the action value Q2 related to fastness. In this case, the action value calculation unit 140 can calculate the second action value Q by Q = 3Q1 + 2Q2 based on the weight W1 and the weight W2 thus determined.

For example, when the current time is 9:45, the remaining time is 15 minutes and substantially no time is remaining, and thus the ratio calculation unit 130 may set "1" to the weight W1 for the action value Q1 related to safety and may set "5" to the weight W2 for the action value Q2 related to fastness. In this case, the action value calculation unit 140 can calculate the second action value Q by Q = Q1 + 5Q2 based on the weight W1 and the weight W2 thus determined.

For example, when the operation environment matches with a predetermined environment in which the user sets a purpose operation, the environment acquisition unit 120 according to the present embodiment may detect the environment match as the purpose change factor.

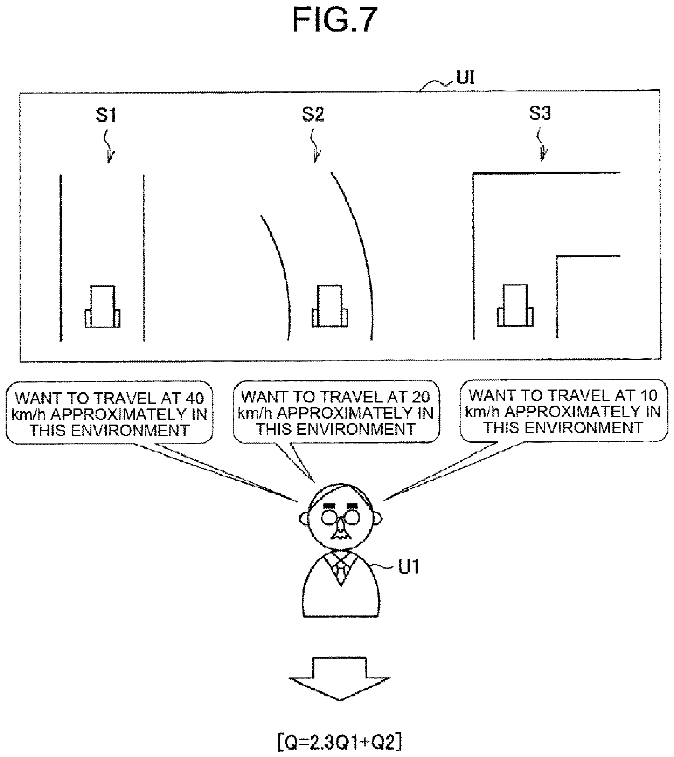

FIG. 7 is a diagram for description of matching of the operation environment with a predetermined environment in which the user sets a purpose operation according to the present embodiment. FIG. 7 illustrates an exemplary user interface UI for prompting the user to set a purpose operation for a predetermined environment.

In the example illustrated in FIG. 7, the user interface UI1 displays predetermined environment states S1 to S3 for prompting the user to set a purpose operation. The environment states S1 to S3 are a state in which the traveling road is straight, a state in which the traveling road is gradually curved, and a state in which the traveling road is bent at right angle, respectively.

The environment acquisition unit 120 according to the present embodiment can present, to the user through a user interface UI, a plurality of environment states S, such as safety and fastness, which can affect change in first action values as described above, thereby querying for an operation desired for the environment states S by the user.

In addition, the environment acquisition unit 120 acquires an input purpose operation as an environment parameter and forwards the environment parameter to the ratio calculation unit 130. Note that the example illustrated in FIG. 7 illustrates a case in which a user U1 inputs a purpose operation by voice, and the purpose operation is indicated as a speed in kilometer per hour.

The ratio calculation unit 130 receives an environment parameter for each environment state S and calculates, by using linear regression or the like, a weight Wn that matches most with installation of a plurality of environment states S. The action value calculation unit 140 according to the present embodiment can calculate a second action value by using the weight Wn calculated as described above. In the example illustrated in FIG. 7, the action value calculation unit 140 calculates the second action value Q by Q =2.3Q1 + Q2 based on the weight Wn.

The second-action-value calculation based on detection of the purpose change factor according to the present embodiment is described above. With the above-described function of the information processing device 10 according to the present embodiment, it is possible to achieve, without relearning, an optimum operation following a purpose that changes in accordance with a situation.

The following describes control of information notification related to the purpose change factor according to the present embodiment and changed behavior. The operation unit 150 according to the present embodiment has a function to notify the user of information related to the purpose change factor and behavior changed based on the second action value when the second action value is changed based on the purpose change factor.

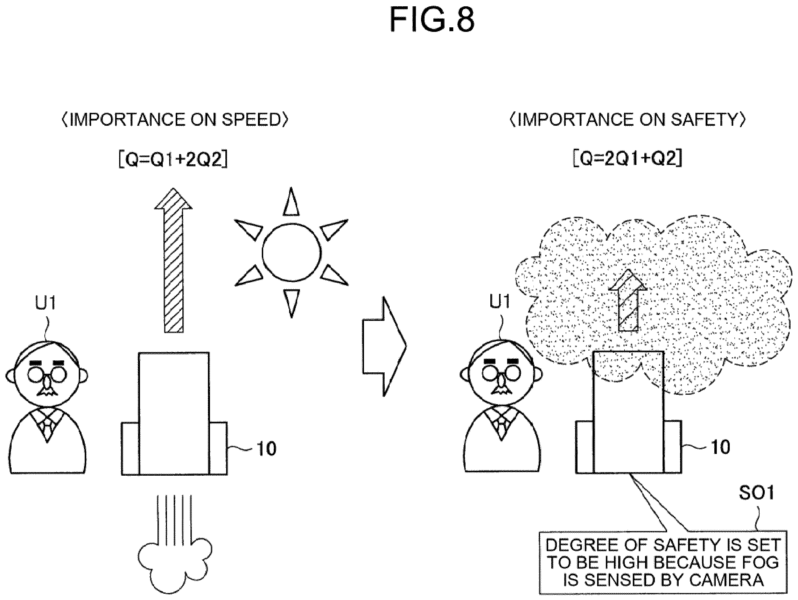

FIG. 8 is a diagram for description of control of information notification related to the purpose change factor and changed behavior according to the present embodiment. FIG. 8 illustrates an example in which the information processing device 10 according to the present embodiment is an automated driving vehicle and weather is acquired as an environment parameter.

For example, the left side in FIG. 8 illustrates the information processing device 10 traveling in a sunny environment. In this case, since visibility is good due to the sunny environment, the ratio calculation unit 130 places importance on speed, sets "1" to the weight W1 for the action value Q1 related to safety, and sets "2" to the weight W2 for the action value Q2 related to fastness.

The action value calculation unit 140 calculates a second action value Q by Q = Q1 + 2Q2 by using the weights W1 and W2 thus determined, and the operation unit 150 performs traveling at relatively high speed based on the calculated second action value Q.

The right side in FIG. 8 illustrates the information processing device 10 traveling in an environment in which fog is generated. In this case, the ratio calculation unit 130 places importance on safety based on detection of generation of fog by the environment acquisition unit 120 based on an image captured by a camera device, sets "2" to the weight W1 for the action value Q1 related to safety, and sets "1" to the weight W2 for the action value Q2 related to fastness.

The action value calculation unit 140 calculates a second action value Q by Q = 2Q1 + Q2 by using the weights W1 and W2 thus determined. In this case, the operation unit 150 according to the present embodiment notifies, based on change in the value of the second action value Q, the user U1 of information related to the purpose change factor and behavior changed based on the second action value.

In the example illustrated in FIG. 8, the operation unit 150 causes the output unit 180 to output a voice speech SO1 notifying that driving is performed with increased safety because generation of fog is sensed.

In this manner, with the operation unit 150 according to the present embodiment, it is possible to prevent the user from feeling discomfort and doubts for behavior change by notifying, before the behavior change, the user of the reason for the behavior change.

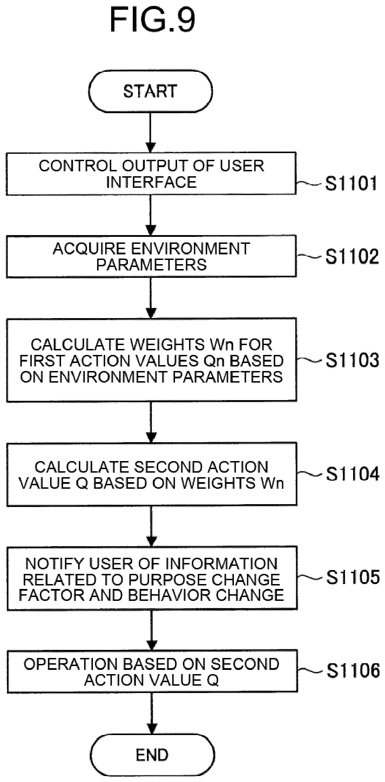

The following describes the process of operation of the information processing device 10 according to the present embodiment in detail. FIG. 9 is a flowchart illustrating the process of operation of the information processing device 10 according to the present embodiment.

With reference to FIG. 9, first, the environment acquisition unit 120 causes the output unit 180 to display the user interface UI for the user to input the purpose change instruction and a purpose operation for a predetermined environment state (S1101).

Subsequently, the environment acquisition unit 120 acquires environment parameters based on the contents of an input to the user interface UI (S1102).

Subsequently, the ratio calculation unit 130 calculates weights Wn for first action values Qn based on the environment parameters acquired at step S1102 (S1103).

Subsequently, the action value calculation unit 140 calculates a second action value Q based on the weights Wn calculated at step S1103 (S1104).

Subsequently, based on the second action value Q calculated at step S1104, the operation unit 150 causes the output unit 180 to output information related to the purpose change factor and behavior change (S1105).

Subsequently, the operation unit 150 executes an operation optimized for a purpose based on the second action value Q calculated at step S1104 (S1106).

The function of the information processing device 10 according to the present embodiment is described above in detail. Note that the above description is made with a main example in which the information processing device 10 according to the present embodiment is an automated driving vehicle, but the information processing device 10 according to the present embodiment is not limited to the example. The information processing device 10 according to the present embodiment may be, for example, an agent device that performs voice dialogue with a user.

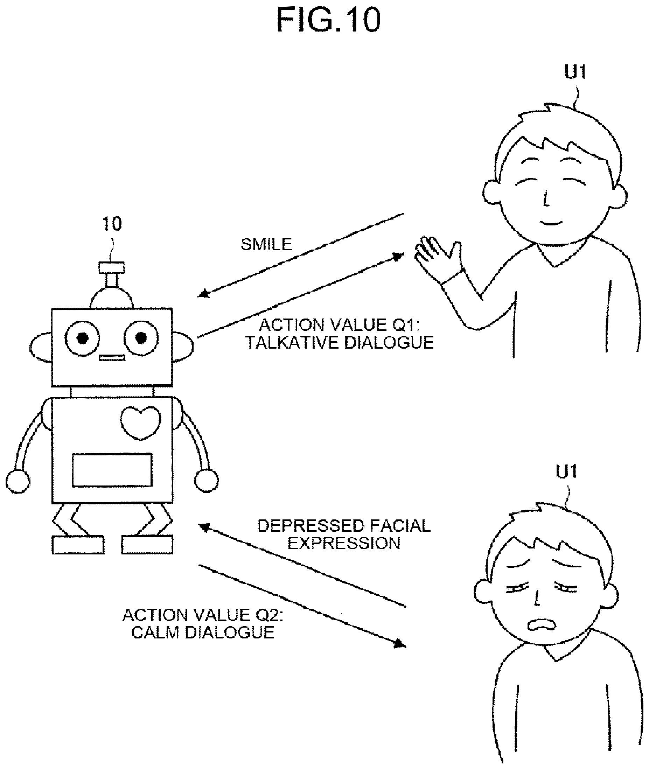

FIG. 10 is a diagram for description of operation control when the information processing device 10 according to the present embodiment is an agent device.

FIG. 10 illustrates a case in which the information processing device 10 operates based on an action value Q1 learned based on a reward R1 for execution of talkative dialogue, and an action value Q2 learned based on a reward R2 for execution of calm dialogue. In this case, the information processing device 10 may acquire the facial expression of a user U as an environment parameter, determine weights based on the environment parameter, and calculate a second action value based on the weights.

Specifically, the information processing device 10 may set the weight W1 for the action value Q1 related to talkative dialogue to be higher as the degree of smiling of the user U1 is higher, and may set the weight W2 for the action value Q2 related to calm dialogue to be higher as the face of the user U1 has a more depressed facial expression.

In this manner, with the information processing device 10 according to the present embodiment, it is possible to flexibly change the personality of an agent in accordance with the state of the user U1, thereby achieving more optimized dialogue.

In addition, the information processing device 10 according to the present embodiment can achieve strategy change in accordance with context in, for example, a picking challenge or a competing game.

For example, in a case of a picking challenge, the information processing device 10 performs an operation based on an action value Q1 learned based on a reward R1 for execution of highly accurate picking, and an action value Q2 learned based on a reward R2 for execution of fast picking.

In this case, the information processing device 10 acquires, as an environment parameter, the remaining time until a time limit and sets the weight W2 for the action value Q2 related to fastness to be higher as the remaining time is shorter, thereby allowing picking strategy in accordance with time to be dynamically changed.

For example, in a case of a mahjong game, the information processing device 10 performs an operation based on an action value Q1 learned based on a reward R1 for winning with a high-score hand, and an action value Q2 learned based on a reward R2 for winning fast.

In this case, the information processing device 10 acquires, as an environment parameter, the score difference between each opponent and the user and sets the weight W1 for the action value Q1 related to winning with a high score to be higher as the score difference is larger, thereby allowing strategy in accordance with the situation of the game to be dynamically changed. In addition, the information processing device 10 may acquire, as environment parameters, vital information such as the heart rate and the amount of sweating of the opponent and spoken words and calculate weights W based on the environment parameters, thereby also allowing strategy to be dynamically changed.

### <<1.4. Feedback related to excess and insufficiency of first action values>>

The following describes feedback related to excess and insufficiency of first action values according to the present embodiment in detail. As described above, the feedback unit 170 according to the present embodiment has a function to control information notification related to excess and insufficiency of first action values based on a result of the second-action-value calculation by the action value calculation unit 140.

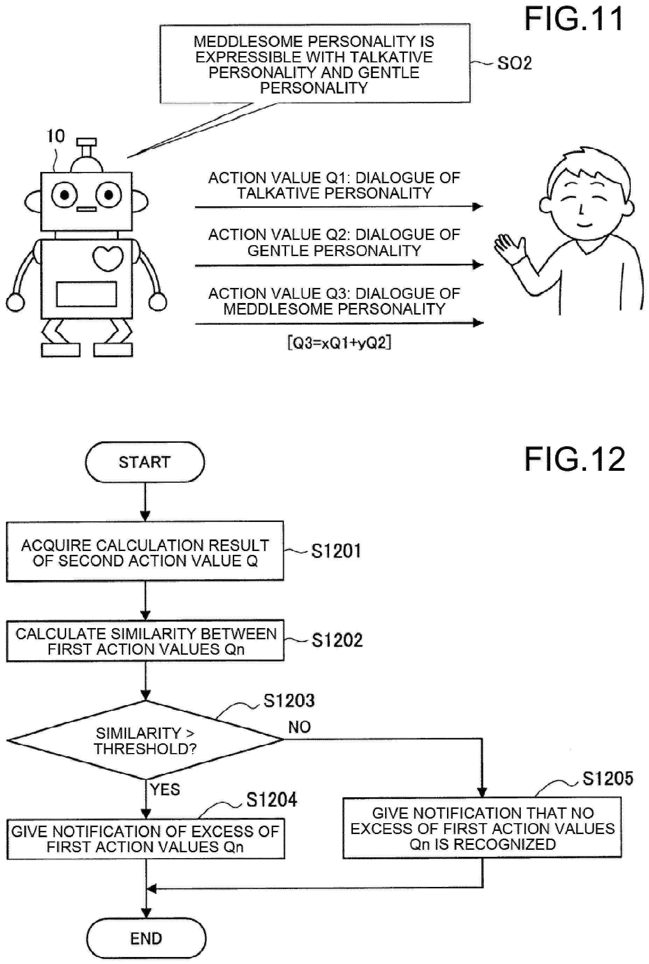

The following first describes notification control related to excess of first action values by the feedback unit 170 according to the present embodiment. FIG. 11 is a diagram for description of the notification control related to excess of first action values according to the present embodiment.

FIG. 11 illustrates an example in which the information processing device 10 according to the present embodiment is an agent device that performs voice dialogue with the user. In the example illustrated in FIG. 11, the information processing device 10 learns an action value Q1 based on a reward R1 for execution of dialogue of talkative personality, an action value Q2 based on a reward R2 for execution of dialogue of gentle personality, and an action value Q3 based on a reward R3 for execution of conversation of meddlesome personality.

In a case as described above, upon detection of a first action value that is expressible in combination of a plurality of other first action values, the feedback unit 170 according to the present embodiment may cause the output unit 180 to execute information notification related to excess of the detected first action value.

In the example illustrated in FIG. 11, the feedback unit 170 detects that the action value Q3 related to meddlesome personality is expressible as Q3 = xQ1 + yQ2 in combination of the action value Q1 related to talkative personality and the action value Q2 related to gentle personality, and causes the output unit 180 to output a voice speech SO2 that gives notification of excess of the action value Q3.

In this manner, with the feedback unit 170 according to the present embodiment, it is possible to point out an excessive first action value Qn to the designer or the like so that the designer can reduce memory and calculation amounts by deleting a network corresponding to the action value Qn.

For example, in automated driving control, when excess is detected for a particular action value Qn, the designer can apply this finding to operation control learning of another device such as a drone, and for example, an effect of reducing a learning time is expected.

The following describes the process of the notification control related to excess of first action values in detail with reference to FIG. 12. FIG. 12 is a flowchart illustrating the process of the notification control related to excess of first action values.

With reference to FIG. 12, the feedback unit 170 first acquires, from the log holding unit 160, a calculation result of a second action value Q calculated by the action value calculation unit 140 (S1201).

Subsequently, the feedback unit 170 calculates the similarity between first action values Qn based on the calculation result acquired at step S1201 (S1202). In this case, the feedback unit 170 calculates the similarity based on, for example, a correlation value between the first action values Qn. The feedback unit 170 may calculate, for example, the similarity between "W1Q1 + W2Q2" and "Q3".

Subsequently, the feedback unit 170 determines whether the similarity calculated at step S1202 exceeds a threshold (S1203).

If the similarity exceeds the threshold (YES at S1203), the feedback unit 170 causes the output unit 180 to output a notification related to excess of the first action values Qn (S1204).

On the other hand, if the similarity is equal to or lower than the threshold (NO at S1203), the feedback unit 170 causes the output unit 180 to output a notification of no excess of the first action values Qn is recognized (S1205). Note that the notification at step S1205 does not necessarily need to be performed.

The notification control related to excess of first action values according to the present embodiment is described above. The following describes notification control related to insufficiency of first action values according to the present embodiment.

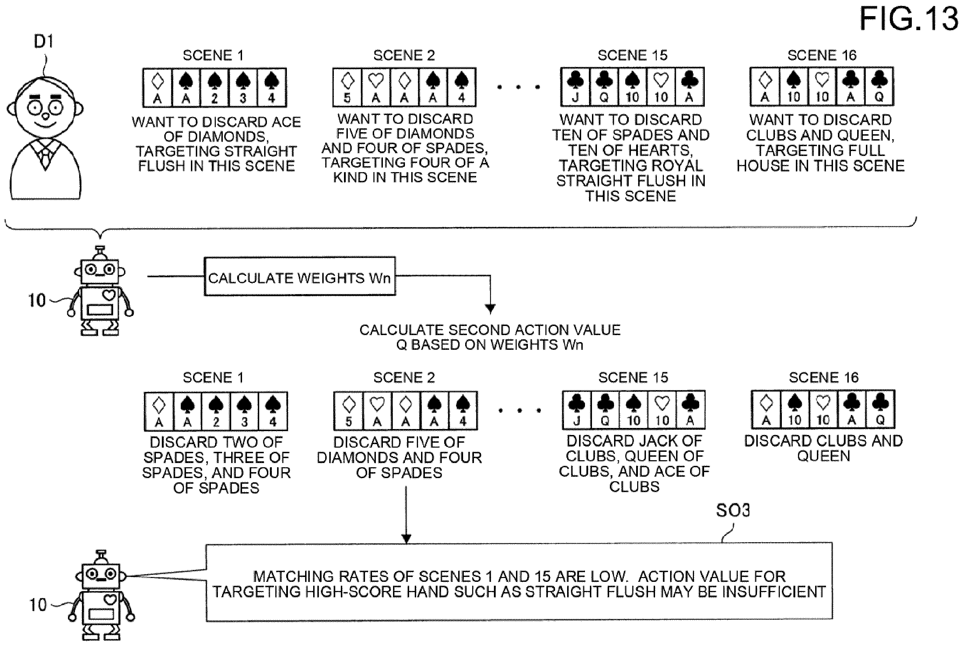

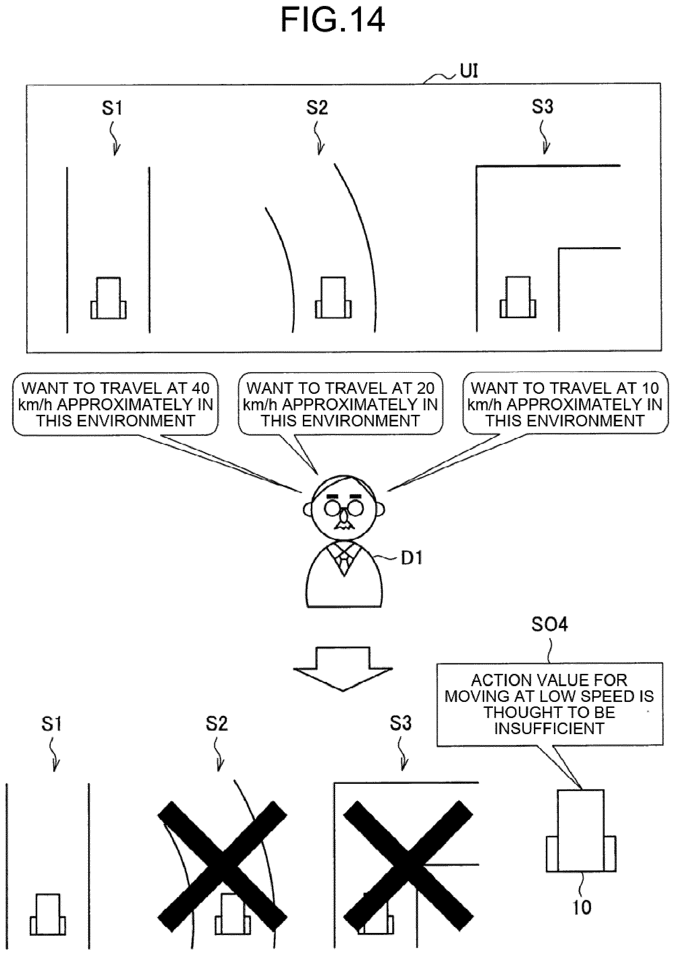

FIGS. 13 and 14 are diagrams for description of the notification control related to insufficiency of first action values.

FIG. 13 illustrates an example in which the information processing device 10 according to the present embodiment proposes strategy in accordance with context in a poker game. In this case, first, a designer D1 sets a purpose operation for each predetermined environment state (scene). In the example illustrated in FIG. 13, the designer D1 sets, for each of Scenes 1 to 16, a target hand and cards to be discarded.

Subsequently, the ratio calculation unit 130 calculates weights Wn for achieving the set purpose operation, and the action value calculation unit 140 calculates a second action value Q based on the weights Wn.

Subsequently, the feedback unit 170 according to the present embodiment calculates the degree of matching between an operation corresponding to the calculated second action value Q and the purpose operation set by the designer, extracts operations related to scenes for which the degree of matching is lower than a threshold, and extracts a characteristic common to the operations.

Subsequently, the feedback unit 170 causes the output unit 180 to output a notification related to insufficiency of first action values Qn based on the extracted characteristic. In the example illustrated in FIG. 13, the feedback unit 170 causes the output unit 180 to output a voice speech SO3 indicating insufficiency of a first action value for targeting a high-score hand.

FIG. 14 illustrates an example in which the information processing device 10 according to the present embodiment is an automated driving vehicle. In this case, first, the designer D1 sets a purpose operation for each predetermined environment state (scene). In the example illustrated in FIG. 14, the designer D1 sets a speed in kilometer per hour to each of the environment states S1 to S3.

Subsequently, the ratio calculation unit 130 calculates weights Wn for achieving the set purpose operation (speed in kilometer per hour), and the action value calculation unit 140 calculates a second action value Q based on the weights Wn.

Subsequently, the feedback unit 170 according to the present embodiment calculates the degree of matching between an operation corresponding to the calculated second action value Q and the purpose operation set by the designer, extracts operations related to environment states S for which the degree of matching is lower than a threshold, and extracts a characteristic common to the operations. In the example illustrated in FIG. 14, the feedback unit 170 extracts a characteristic common to traveling at 20 kilometers per hour and traveling at 10 kilometers per hour based on the fact that the degree of matching is lower than the threshold in environment states S2 and S3.

Subsequently, the feedback unit 170 causes the output unit 180 to output a notification related to insufficiency of first action values Qn based on the extracted characteristic. In the example illustrated in FIG. 14, the feedback unit 170 causes the output unit 180 to output a voice speech SO4 indicating insufficiency of a first action value for moving at low speed.

In this manner, the feedback unit 170 according to the present embodiment can execute information notification related to insufficiency of first action values Qn when a second action value Q for achieving a purpose operation set for a predetermined environment cannot be calculated from first action values Qn.

With the above-described function of the feedback unit 170 according to the present embodiment, the designer can clearly understand insufficiency of a first action value Qn that is insufficient for achieving a purpose operation, thereby utilizing the understanding for designing of learning.

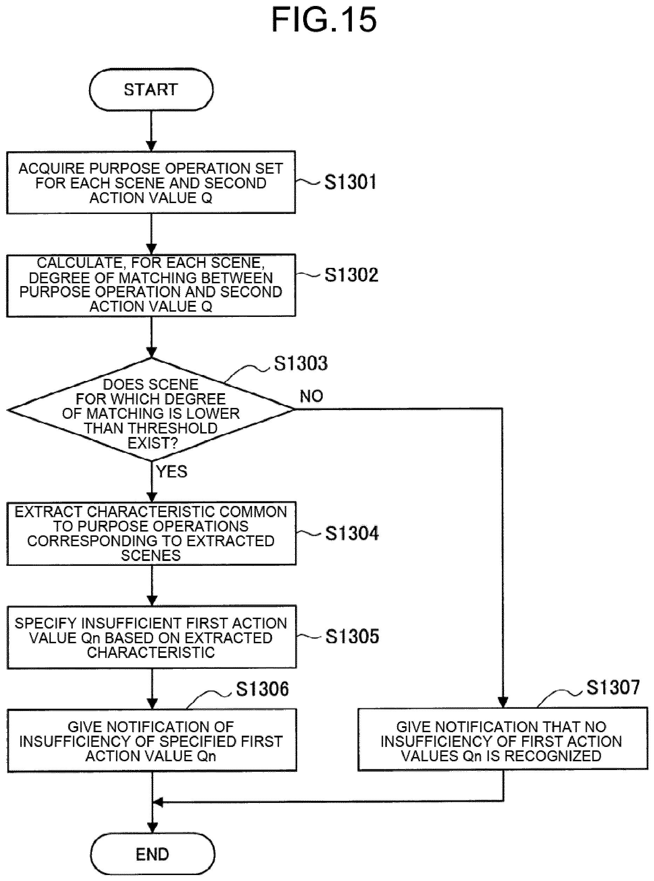

The following describes the process of the notification control related to insufficiency of first action values according to the present embodiment in detail. FIG. 15 is a flowchart illustrating the process of the notification control related to insufficiency of first action values according to the present embodiment.

With reference to FIG. 15, first, the feedback unit 170 acquires, from the log holding unit 160, a purpose operation set for each environment state (scene) and a second action value Q (S1301).

Subsequently, the feedback unit 170 calculates, for each scene, the degree of matching between the purpose operation and the second action value Q (S1302).

Subsequently, the feedback unit 170 determines whether a scene for which the degree of matching calculated at step S1302 is lower than a threshold exists (S1303).

If no scene for which the degree of matching is lower than the threshold exists (NO at S1303), the feedback unit 170 causes the output unit 180 to give notification that no insufficiency of first action values Qn is recognized (S1307). Note that the notification at step S1307 does not necessarily need to be performed.

On the other hand, if a scene for which the degree of matching is lower than the threshold exists (YES at S1303), the feedback unit 170 extracts a characteristic common to purpose operations corresponding to extracted scenes (S1304).

Subsequently, the feedback unit 170 specifies an insufficient first action value Qn based on the characteristic extracted at step S1304 (S1305).

Subsequently, the feedback unit 170 causes the output unit 180 to output a notification related to insufficiency of the first action value Qn specified at step S1305 (S1306).

### <2. Exemplary hardware configuration>

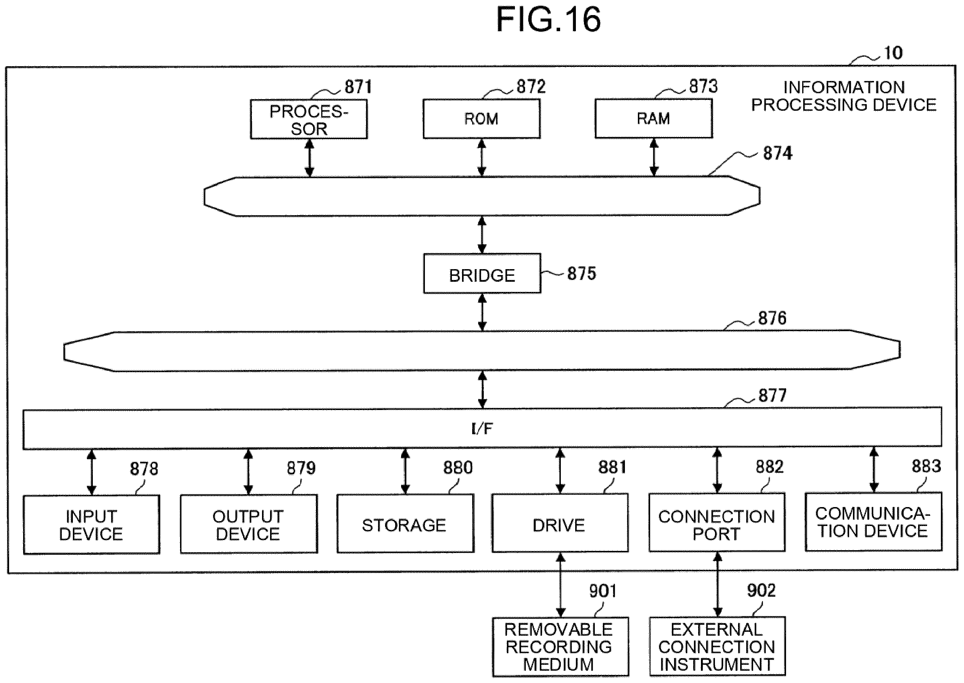

The following describes an exemplary hardware configuration of the information processing device 10 according to an embodiment of the present disclosure. FIG. 16 is a block diagram illustrating an exemplary hardware configuration of the information processing device 10 according to the embodiment of the present disclosure. With reference to FIG. 16, the information processing device 10 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that the hardware configuration illustrated herein is exemplary, and some of the components may be omitted. In addition, a component other than the components illustrated herein may be provided.

### (Processor 871)

The processor 871 functions, for example, as an arithmetic processing device or a control device and controls the whole or part of the operation of each component based on various computer programs recorded in the ROM 872, the RAM 873, the storage 880, and a removable recording medium 901.

### (ROM 872 and RAM 873)

The ROM 872 is a unit configured to store computer programs read by the processor 871, data used in calculation, and the like. The RAM 873 temporarily or permanently stores, for example, computer programs read by the processor 871, various parameters that change as appropriate when the computer programs are executed, and the like.

### (Host bus 874, bridge 875, external bus 876, and interface 877)

For example, the processor 871, the ROM 872, and the RAM 873 are connected with one another through the host bus 874 through which fast data transmission is possible. Meanwhile, for example, the host bus 874 is connected with the external bus 876, the speed of data transmission through which is relatively low, through the bridge 875. The external bus 876 is connected with various kinds of components through the interface 877.

### (Input device 878)

For example, a mouse, a keyboard, a touch panel, a button, a switch, and a lever are used as the input device 878. In addition, a remote controller capable of transmitting a control signal by using infrared waves or other radio waves is used as the input device 878 in some cases. In addition, a voice input device such as a microphone is included in the input device 878.

### (Output device 879)

The output device 879 is a device capable of visually or audibly notifying a user of acquired information and is, for example, a display device such as a cathode ray tube (CRT), an LCD, or an organic EL, an audio output device such as a speaker or a headphone, a printer, a cellular phone, or a facsimile. The output device 879 according to the present disclosure includes various kinds of vibration devices capable of outputting tactile stimulation.

### (Storage 880)

The storage 880 is a device for storing various kinds of data. For example, a magnetic storage device such as a hard disk drive (HDD), a semiconductor storage device, an optical storage device, or a magneto-optical storage device is used as the storage 880.

### (Drive 881)

The drive 881 is, for example, a device configured to read information recorded in the removable recording medium 901 such as a magnetic disk, an optical disk, a magneto optical disc, or a semiconductor memory, or write information to the removable recording medium 901.

### (Removable recording medium 901)

The removable recording medium 901 is, for example, a DVD media, a Blu-ray (registered trademark) media, a HD DVD media, or various semiconductor storage medium. The removable recording medium 901 may be, for example, an IC card on which a non-contact IC chip is mounted, or an electronic device.

### (Connection port 882)

The connection port 882 is a port for connecting an external connection instrument 902, such as a universal serial bus (USB) port, an IEEE1394 port, a small computer system interface (SCSI), an RS-232C port, or an optical audio terminal.

### (External connection instrument 902)

The external connection instrument 902 is, for example, a printer, a portable music player, a digital camera, a digital video camera, or an IC recorder.

### (Communication device 883)

The communication device 883 is a communication device for connecting to a network and is, for example, a wired or wireless LAN, Bluetooth (registered trademark), or wireless USB (WUSB) communication card, an optical communication router, an asymmetric digital subscriber line (ADSL) router, or various communication modems.

### <3. Conclusion>

As described above, the information processing device 10 according to an embodiment of the present disclosure includes the action value calculation unit 140 configured to calculate an action value that determines the behavior of the operation unit 150. In addition, the action value calculation unit 140 is characterized to dynamically calculate, based on an acquired purpose change factor and a plurality of first action values learned based on rewards different from each other, a second action value to be input to the operation unit 150. In addition, the information processing device 10 according to the embodiment of the present disclosure includes the feedback unit 170 configured to determine, for the operation of the operation unit 150 that performs dynamic behavior based on a plurality of action values learned based on rewards different from each other, excess and insufficiency related to the above-described action values and control information notification related to the excess and insufficiency. With this configuration, it is possible to achieve an optimum operation following purpose change.

Preferable embodiments of the present disclosure are described above in detail with reference to the accompanying drawings, but the technical scope of the present disclosure is not limited to such examples. Various changes and modifications could be thought of by a person having typical knowledge in the technical field of the present disclosure within the range of the technical idea written in the claims, and it should be understood that these changes and modifications belong to the technical scope of the present disclosure.

Effects stated in the present specification are explanatory or exemplary but not restrictive. Thus, the technology according to the present disclosure achieves, together with or in place of the above-described effects, any other effect that is obvious to the skilled person in the art from description of the present specification.

In addition, a computer program for causing hardware such as a CPU, a ROM, and a RAM built in a computer to achieve a function equivalent to that of any component included in the information processing device 10 may be produced, and a computer-readable recording medium in which the computer program is recorded may be provided.

The steps of each processing performed by the information processing device 10 in the present specification do not necessarily need to be processed in a temporally sequential manner in the order written in the corresponding flowchart. For example, the steps of each processing performed by the information processing device 10 may be processed in an order different from the order written in the corresponding flowchart, or may be processed in parallel.

Note that configurations as described below belong to the technical scope of the present disclosure.
(1) An information processing device comprising an action value calculation unit configured to calculate an action value that determines behavior of an operation unit, wherein
   based on an acquired purpose change factor and a plurality of first action values learned based on rewards different from each other, the action value calculation unit dynamically calculates a second action value to be input to the operation unit.
(2) The information processing device according to (1), wherein the action value calculation unit dynamically calculates a plurality of the second action values based on ratios determined based on the purpose change factor.
(3) The information processing device according to (1) or (2), wherein the action value calculation unit dynamically calculates the second action value by summing a plurality of the first action values, based on weights of the first action values determined based on the purpose change factor.
(4) The information processing device according to any one of (1) to (3), wherein the purpose change factor includes a purpose change instruction provided by a user.
(5) The information processing device according to any one of (1) to (4), wherein the purpose change factor includes change in an operation environment of the operation unit.
(6) The information processing device according to (5), wherein the purpose change factor includes matching of the operation environment with a predetermined environment estimated from context.
(7) The information processing device according to (5) or (6), wherein the purpose change factor includes matching of the operation environment with a predetermined environment in which a user sets a purpose operation.
(8) The information processing device according to any one of (1) to (7), further comprising an operation unit configured to dynamically change behavior based on the second action value and an estimated operation environment.
(9) The information processing device according to (8), wherein, when the second action value is changed based on the purpose change factor, the operation unit notifies a user of information related to the purpose change factor and behavior that changes based on the second action value.
(10) The information processing device according to any one of (1) to (9), further comprising a ratio calculation unit configured to calculate, based on the acquired purpose change factor, ratios to be used to calculate the second action value.
(11) An information processing device comprising a feedback unit configured to determine, for operation of an operation unit that performs dynamic behavior based on a plurality of action values learned based on rewards different from each other, excess and insufficiency related to the action values and control information notification related to the excess and insufficiency.
(12) The information processing device according to (11), wherein
   the operation unit executes the behavior based on a second action value dynamically calculated based on a plurality of first action values learned based on rewards different from each other, and a weight of each of the first action values determined in accordance with an acquired environment, and
   the feedback unit determines excess and insufficiency related to the first action values based on a calculation result related to the second action value.
(13) The information processing device according to (12), wherein, when the second action value that achieves a purpose operation set to a predetermined environment is not capable of being calculated from the first action values, the feedback unit executes information notification related to insufficiency of the first action values.
(14) The information processing device according to (13), wherein the feedback unit calculates a degree of matching between the purpose operation corresponding to the predetermined environment and the second action value calculated in the predetermined environment, and executes information notification related to insufficiency of the first action values when the degree of matching is lower than a threshold.
(15) The information processing device according to (14), wherein the feedback unit specifies the first action value that is insufficient based on the predetermined environment in which the degree of matching is lower than a threshold, and executes information notification related to insufficiency of the specified first action value.
(16) The information processing device according to (15), wherein the feedback unit extracts a characteristic common to a plurality of the purpose operations corresponding to a plurality of the predetermined environments in which the degree of matching is lower than a threshold, and specifies the first action value that is insufficient based on the characteristic.
(17) The information processing device according to any one of (12) to (16), wherein, upon detection of the first action value that is expressible in combination of a plurality of the first action values that are other than the detected first action value, the feedback unit executes information notification related to excess of the detected first action value.
(18) The information processing device according to (17), wherein the feedback unit calculates a similarity of each of a plurality of the first action values based on the first action values and the weights, and upon detection of the first action value having the similarity that exceeds a threshold, executes information notification related to excess of the detected first action value.
(19) An information processing method executed by a processor, the information processing method comprising calculating an action value that determines behavior of an operation unit, wherein
   the calculating includes dynamically calculating, based on an acquired purpose change factor and a plurality of first action values learned based on rewards different from each other, a second action value to be input to the operation unit.
(20) An information processing method executed by a processor, the information processing method comprising determining, based on an operation result of an operation unit that performs dynamic behavior based on a plurality of action values learned based on rewards different from each other, excess and insufficiency related to the action values, and controlling information notification related to the excess and insufficiency.

### Reference Signs List

- 10: information processing device
- 110: reinforcement learning unit
- 120: environment acquisition unit
- 130: ratio calculation unit
- 140: action value calculation unit
- 150: operation unit
- 160: log holding unit
- 170: feedback unit
- 180: output unit

## Claims

1. An information processing device comprising an action value calculation unit configured to calculate an action value that determines behavior of an operation unit, wherein
based on an acquired purpose change factor and a plurality of first action values learned based on rewards different from each other, the action value calculation unit dynamically calculates a second action value to be input to the operation unit.

2. The information processing device according to claim 1, wherein the action value calculation unit dynamically calculates a plurality of the second action values based on ratios determined based on the purpose change factor.

3. The information processing device according to claim 1, wherein the action value calculation unit dynamically calculates the second action value by summing a plurality of the first action values, based on weights of the first action values determined based on the purpose change factor.

4. The information processing device according to claim 1, wherein the purpose change factor includes a purpose change instruction provided by a user.

5. The information processing device according to claim 1, wherein the purpose change factor includes change in an operation environment of the operation unit.

6. The information processing device according to claim 5, wherein the purpose change factor includes matching of the operation environment with a predetermined environment estimated from context.

7. The information processing device according to claim 5, wherein the purpose change factor includes matching of the operation environment with a predetermined environment in which a user sets a purpose operation.

8. The information processing device according to claim 1, further comprising an operation unit configured to dynamically change behavior based on the second action value and an estimated operation environment.

9. The information processing device according to claim 8, wherein, when the second action value is changed based on the purpose change factor, the operation unit notifies a user of information related to the purpose change factor and behavior that changes based on the second action value.

10. The information processing device according to claim 1, further comprising a ratio calculation unit configured to calculate, based on the acquired purpose change factor, ratios to be used to calculate the second action value.

11. An information processing device comprising a feedback unit configured to determine, for operation of an operation unit that performs dynamic behavior based on a plurality of action values learned based on rewards different from each other, excess and insufficiency related to the action values and control information notification related to the excess and insufficiency.

12. The information processing device according to claim 11, wherein
the operation unit executes the behavior based on a second action value dynamically calculated based on a plurality of first action values learned based on rewards different from each other, and a weight of each of the first action values determined in accordance with an acquired environment, and
the feedback unit determines excess and insufficiency related to the first action values based on a calculation result related to the second action value.

13. The information processing device according to claim 12, wherein, when the second action value that achieves a purpose operation set to a predetermined environment is not capable of being calculated from the first action values, the feedback unit executes information notification related to insufficiency of the first action values.

14. The information processing device according to claim 13, wherein the feedback unit calculates a degree of matching between the purpose operation corresponding to the predetermined environment and the second action value calculated in the predetermined environment, and executes information notification related to insufficiency of the first action values when the degree of matching is lower than a threshold.

15. The information processing device according to claim 14, wherein the feedback unit specifies the first action value that is insufficient based on the predetermined environment in which the degree of matching is lower than a threshold, and executes information notification related to insufficiency of the specified first action value.

16. The information processing device according to claim 15, wherein the feedback unit extracts a characteristic common to a plurality of the purpose operations corresponding to a plurality of the predetermined environments in which the degree of matching is lower than a threshold, and specifies the first action value that is insufficient based on the characteristic.

17. The information processing device according to claim 12, wherein, upon detection of the first action value that is expressible in combination of a plurality of the first action values that are other than the detected first action value, the feedback unit executes information notification related to excess of the detected first action value.

18. The information processing device according to claim 17, wherein the feedback unit calculates a similarity of each of a plurality of the first action values based on the first action values and the weights, and upon detection of the first action value having the similarity that exceeds a threshold, executes information notification related to excess of the detected first action value.

19. An information processing method executed by a processor, the information processing method comprising calculating an action value that determines behavior of an operation unit, wherein
the calculating includes dynamically calculating, based on an acquired purpose change factor and a plurality of first action values learned based on rewards different from each other, a second action value to be input to the operation unit.

20. An information processing method executed by a processor, the information processing method comprising determining, based on an operation result of an operation unit that performs dynamic behavior based on a plurality of action values learned based on rewards different from each other, excess and insufficiency related to the action values, and controlling information notification related to the excess and insufficiency.
